# EUROPÄISCHE PATENTANMELDUNG

(11) **EP 3 042 735 A1**
(43) Veröffentlichungstag der Anmeldung: **13.07.2016**
(21) Anmeldenummer: 15150225.9
(22) Anmeldetag: 06.01.2015
(51) Int. Cl.: B23P 19/06, B25B 27/30, F16F 9/32, B61K 11/00, B23P 6/00

(54) **Vorrichtung zur Wartung von Stossdämpfern**

(71) Anmelder: Schweizerische Bundesbahnen SBB, 3000 Bern (CH)
(72) Erfinder: Dzeba, Gordan, 5610 Wohlen (CH)
(74) Vertreter: Rutz & Partner

(57) **Zusammenfassung**

Die Vorrichtung (1), die der Wartung von Stossdämpfern (9) dient, die einen Dämpferfuss (91) und einen Dämpferkopf (96) sowie wenigstens ein dazwischenliegendes Rohrelement (93, 94) aufweisen, umfasst wenigstens eine Haltevorrichtung (3, 4), mittels der ein erstes Teil des Stossdämpfers (9) fixierbar ist, und eine Drehvorrichtung (2), mittels der ein zweites Teil der Stossdämpfers (9) drehbar ist. Erfindungsgemäss ist eine Montagesäule (8) mit wenigstens einer Laufschiene (81) vorgesehen, entlang der die mit einem Drehantrieb (22) versehene Drehvorrichtung (2) koaxial zu einer Arbeitsachse (x) verschiebbar und an ein zu drehendes Teil des Stossdämpfers (9) ankoppelbar ist, der mittels der wenigstens einen Haltevorrichtung (3, 4) entlang der Arbeitsachse (x) ausgerichtet fixierbar ist.

## Beschreibung

Die Erfindung betrifft eine Vorrichtung zur Wartung von Stossdämpfern.

Aus [1], Hightech für die Zukunft auf Schienen, ZF Friedrichshafen AG, 2012, ist bekannt, dass in einem Drehgestell eines Eisenbahnfahrzeugs oft verschiedenartige Dämpfer, wie Vertikaldämpfer, Horizontaldämpfer oder Schlingerdämpfer eingesetzt werden.

Ein Stossdämpfer, der in einem Drehgestell einsetzbar ist, ist z.B. aus [2], DE10031975A1, bekannt. Gezeigt ist ein Zweirohr-Stossdämpfer mit einer Kolbenstange, welche mit einem auf der Innenwand eines Dämpferzylinders axial geführten Kolben verbunden ist. Der Dämpferzylinder ist mittels einer Kolbenstangenführung und eines Bodenventiles konzentrisch in einem Behälter eingespannt. In der Kolbenstangenführung ist die Kolbenstange geführt und mittels einer Kolbenstangendichtung nach aussen abgedichtet. Der mit Dämpfungsflüssigkeit gefüllte Innenraum des Dämpferzylinders wird vom Kolben in einen oberen Arbeitsraum und einen unteren Arbeitsraum unterteilt. Über das Bodenventil steht der untere Arbeitsraum mit einem Ausgleichsraum in Verbindung, der eine Dämpfungsflüssigkeits- und gegebenenfalls eine Gasfüllung aufweist.

Oft ist die Kolbenstange des Stossdämpfers, z.B. mittels einer Gewindescheibe, mit einem Schutzrohr verschraubt, welches koaxial zum Dämpferzylinder angeordnet ist und diesen zumindest teilweise überragt.

Aus [3], EP2786912A1, ist eine Hebevorrichtung bekannt, mittels der ein Drehgestell manipuliert werden kann, um Wartungsarbeiten auszuführen und Stossdämpfer demontieren zu können, die anschliessend in einer mechanischen Werkstatt gewartet werden.

Zur Wartung der Stossdämpfer muss, sofern vorhanden, zuerst das Schutzrohr von der Kolbenstange gelöst werden. Anschliessend ist die Kolbenstangenführung zu lösen, wonach die Kolbenstange mit dem Dämpferkolben aus dem Dämpferzylinder gezogen werden können. Nach den Wartungsarbeiten, z.B. nach dem Austausch der Dämpfungsflüssigkeit und dem Austausch der Dichtungen, wird die Kolbenstangenführung wieder in den Dämpferzylinder eingeschraubt und das Schutzrohr wieder mit der Kolbenstange verbunden.

Zum Lösen der genannten Teile des Stossdämpfers werden üblicherweise massive Werkzeuge eingesetzt. Der Stossdämpfer wird z.B. einseitig in einer Werkbank eingespannt, wonach ein anderes Teil des Stossdämpfers mittels eines Hebelwerkzeugs erfasst und gedreht wird. Diese Arbeiten sind zeitaufwendig und erfordern grosse Kräfte. Auf dieselbe Weise geschieht der Zusammenbau des Stossdämpfers, wobei die Gewindeelemente oft zu stark fest angezogen und beschädigt werden. Ein starkes Festziehen ist hingegen erforderlich, damit sich die Gewindeteile während des Betriebs des Stossdämpfers nicht voneinander lösen. Bei den Wartungsarbeiten werden die Stossdämpfer daher oft beschädigt. Besonders gefährdet sind die sogenannten Silentblocks, d.h. elastische Lagerblöcke z.B. aus Gummi, die vorzugsweise im Dämpferkopf und im Dämpferfuss gelagert sind.

Die Wartungsarbeiten verursachen daher meist hohe Kosten und gewährleisten oft nicht die gewünschte Qualität der gewarteten Stossdämpfer.

Weiterhin wird innerhalb der mechanischen Werkstatt ein relativ grosser Raum in Anspruch genommen, um die Hebelwerkzeuge einsetzen zu können. Beim Einsatz grösserer Werkzeuge und der Anwendung grösserer Kräfte bestehen zudem Verletzungsgefahren.

Der vorliegenden Erfindung liegt daher die Aufgabe zugrunde, eine verbesserte Vorrichtung zur Wartung von Stossdämpfern zu schaffen.

Insbesondere ist eine Wartungsvorrichtung zu schaffen, die es erlaubt, Stossdämpfer in einfacher Weise in ihre Bestandteile zu zerlegen und wieder zusammen zu bauen. Auf die Verwendung manuell betätigter Hebelwerkzeuge soll verzichtet werden.

Die Wartungsvorrichtung soll in einfacher Weise und ohne Kraftaufwand bedient werden können. Die Wartungsvorrichtung soll zudem wenig Raum in Anspruch nehmen und an beliebigen Positionen installierbar sein, sodass die Wartung der Stossdämpfer z.B. an dem Ort erfolgen kann, an dem die Stossdämpfer aus einem Drehgestell demontiert werden.

Die Manipulation der Stossdämpfer und Teilen davon soll mittels der Wartungsvorrichtung zudem derart ausgeführt werden können, dass keine Teile der Stossdämpfer beschädigt werden und diese optimal wieder zusammengesetzt werden können. Mittels der Vorrichtung soll daher eine hohe durchschnittliche Wartungsqualität erzielt werden.

Die Wartungsvorrichtung soll es zudem erlauben, verschiedenartige Stossdämpfer unterschiedlicher Hersteller zu bearbeiten. Insbesondere sollen Stossdämpfer bearbeitet werden können, die im Dämpferfuss und/oder im Dämpferkopf einen Silentblock, d.h. eine elastische Lagerung aufweisen.

Die Wartungsarbeiten und Reparaturarbeiten sollen dabei rasch und bequem und ohne Belastung oder Gefährdung des Wartungspersonals durchgeführt werden können.

Diese Aufgabe wird mit einer Vorrichtung zur Wartung von Stossdämpfern gelöst, welche die in Anspruch 1 angegebenen Merkmale aufweist. Vorteilhafte Ausgestaltungen der Erfindung sind in weiteren Ansprüchen angegeben.

Die Vorrichtung, die der Wartung von Stossdämpfern dient, die einen Dämpferfuss und einen Dämpferkopf sowie wenigstens ein dazwischenliegendes Rohrelement aufweisen, umfasst wenigstens eine Haltevorrichtung, mittels der ein erstes Teil des Stossdämpfers fixierbar ist, und eine Drehvorrichtung, mittels der ein zweites Teil der Stossdämpfers drehbar ist.

Erfindungsgemäss ist eine Montagesäule mit wenigstens einer Laufschiene vorgesehen, entlang der die mit einem Drehantrieb versehene Drehvorrichtung koaxial zu einer Arbeitsachse verschiebbar und an ein zu drehendes Teil des Stossdämpfers ankoppelbar ist, der mittels der wenigstens einen Haltevorrichtung mit seiner Längsachse bzw. der Dämpferachse entlang der Arbeitsachse ausgerichtet fixierbar ist.

In die erfindungsgemässe Wartungsvorrichtung können somit Stossdämpfer, die entlang der Dämpferachse elastisch komprimierbar sind, eingesetzt, fixiert und bearbeitet werden.

Dazu wird der Stossdämpfer mittels der wenigstens einen Haltevorrichtung fixiert und mit seiner Dämpferachse koaxial zur Arbeitsachse der Wartungsvorrichtung ausgerichtet. Diese Arbeit kann bequem ausgeführt werden, wobei lediglich Kraft für das Anheben des Stossdämpfers aufgewendet werden muss. Nach der Fixierung des Stossdämpfers kann dieser mittels der Drehvorrichtung bearbeitet werden, um Teile zu lösen, die für die Durchführung der Wartungsarbeiten entfernt werden müssen.

Der Stossdämpfer kann daher an der Vorrichtung bequem bearbeitet werden, wobei die Drehvorrichtung über verschiedene Kopplungswerkzeuge an die zu lösenden Teile des Stossdämpfers ankoppelbar ist. Die erfindungsgemässe Vorrichtung erlaubt es dadurch, verschiedenartige Stossdämpfer unterschiedlicher Hersteller ohne zusätzlichen Aufwand zu bearbeiten.

Die erfindungsgemässe Wartungsvorrichtung umfasst wenigstens eine an der Montagesäule angeordnete Wartungsstation. Vorzugsweise ist die Montagesäule auf zwei einander gegenüberliegenden Seiten je mit einer Wartungsstation versehen, sodass Stossdämpfer gleichzeitig auf zwei Seiten der Montagesäule bearbeitet werden können. Die Montagesäule steht vorzugsweise auf einem Säulenfuss und ist vorzugsweise vertikal ausgerichtet, sodass sie nur wenig Raum in Anspruch nimmt und an beliebiger Stelle innerhalb einer Werkhalle aufgestellt werden kann. Auf Hebelwerkzeuge kann verzichtet werden, sodass nur ein geringer Spielraum für die Aktivitäten des Wartungspersonals benötigt wird und Sicherheitsrisiken entfallen. Die Wartungsvorrichtung kann auf einfache Weise vorzugsweise mittels einer Steuereinheit bedient werden.

Vorzugsweise umfasst die Drehvorrichtung ein zylinderförmiges Kopplungsteil, das in einer Lagervorrichtung derart gehalten ist, dass es koaxial zur Arbeitsachse ausgerichtet und um diese Arbeitsachse drehbar ist. Das Kopplungsteil ist auf der von der Haltevorrichtung abgewandten Seite mit einem Drehantrieb verbunden und auf der den Haltevorrichtungen zugewandten Seite direkt oder über wenigstens ein Kopplungswerkzeug an ein zu lösendes Teil des Stossdämpfers ankoppelbar.

Die Verwendung eines zylindrischen Kopplungsteils ist besonders vorteilhaft, da der Stossdämpfer zumindest teilweise in dieses eingeführt werden kann, wonach auch untere Teile des Stossdämpfers vorteilhaft an das Kopplungsteil angekoppelt und gedreht werden können.

Mittels der erfindungsgemässen Wartungsvorrichtung gelingt es somit, beliebige Teile des Stossdämpfers zu erfassen und gegeneinander zu drehen.

In einem ersten Schritt wird z.B. das Schutzrohr, sofern vorhanden, mittels der Haltevorrichtung fixiert, wonach der Dämpferkopf mit der Drehvorrichtung gekoppelt und gedreht wird, bis das Schutzrohr gelöst ist. In der Folge wird z.B. der Dämpferzylinder mittels der Haltevorrichtung fixiert und die Kolbenstangenführung mit der Drehvorrichtung gekoppelt und gelöst. In der Folge wird der Kolben mit der Kolbenstangenführung aus dem Dämpferzylinder herausgezogen. Dies geschieht vorzugsweise mittels eines Krans, weshalb auch hier keine Kraftaufwendung des Wartungspersonals erforderlich ist.

Mittels der Steuereinheit ist der Drehantrieb vorzugsweise derart steuerbar, dass das an die Drehvorrichtung angekoppelte Teil des Stossdämpfers mit einem gewünschten Drehmoment in die eine oder andere Richtung drehbar ist. Die entsprechenden Teile des Stossdämpfers können daher mit einem gewünschten Drehmoment gelöst und wieder festgezogen werden. Auf diese Weise können die Wartungsarbeiten stets mit denselben Parametern und derselben Präzision durchgeführt werden, weshalb eine konstant hohe Qualität der Wartung erreicht wird.

Grundsätzlich sind beliebige Drehantriebe einsetzbar, die das erwünschte Drehmoment aufbringen können. Z.B. werden hydraulische, pneumatische oder elektrische Drehantriebe eingesetzt. Damit Steuersignale und/oder ein Energiemedium problemlos zum Drehantrieb übertragen werden können, ist vorzugsweise eine Energiekette vorgesehen, welche der Drehvorrichtung bei einer Verschiebung folgt.

In einer vorzugsweisen Ausgestaltung ist die wenigstens eine Haltevorrichtung derart gelagert, dass sie mit dem gehaltenen Stossdämpfer quer zur Arbeitsachse der Wartungsvorrichtung in eine Position verschiebbar ist, in der der Stossdämpfer frei liegt und der Dämpferkopf mit der Kolbenstange und dem Dämpferzylinder z.B. mittels eines Krans senkrecht nach oben gezogen werden kann, ohne in den Bereich der Drehvorrichtung zu gelangen.

In einer weiteren vorzugsweisen Ausgestaltung ist die Haltevorrichtung entlang der wenigstens einen Laufschiene verschiebbar, so dass der Stossdämpfer in eine gewünschte Arbeitshöhe gefahren werden kann.

Vorzugsweise ist eine erste Haltevorrichtung vorgesehen, in die der Dämpferfuss formschlüssig einsetzbar ist und drehfest gehalten ist. Der Stossdämpfer kann daher in erste Haltevorrichtung eingesetzt werden, wonach er ohne zusätzliche Massnahmen formschlüssig gehalten ist. Dazu ist die erste Haltevorrichtung mit einer Aufnahmevorrichtung versehen, die der Aufnahme des Dämpferfusses dient. Die Aufnahmevorrichtung ist vorzugsweise derart ausgestaltet, dass nur metallene Teile des Dämpferfusses bzw. das Auge des Dämpferfusses, nicht aber elastische Teile innerhalb des Dämpferauges gehalten werden.

Vorzugsweise weist die Aufnahmevorrichtung ein Halteteil auf, welches mit einem von vorzugsweise mehreren Adaptern verbindbar ist, die je ein Aufnahmeprofil aufweisen, das der Aufnahme und dem Halten des Dämpferfusses eines korrespondierenden Stossdämpfers dient, ohne auf elastische Teile einzuwirken, die im Auge des Dämpferfusses gelagert sind. Das Aufnahmeprofil weist vorzugsweise Aufnahmeöffnungen auf, in die der im Dämpferfuss elastisch gehaltene Kopplungsstab einsetzbar ist. Ein Dämpferfuss kann daher von der ersten Haltevorrichtung stabil gehalten werden, ohne dass die Haltevorrichtung auf die im Dämpferfuss vorgesehene Lagervorrichtung bzw. den Silentblock einwirkt und möglicherweise schädigt. Auf die gleiche Weise werden vorzugsweise Kopplungswerkzeuge vorgesehen, die lediglich das Auge des Dämpferkopfs erfassen und nicht auf den dort vorgesehenen Silentblock einwirken. Die Wartungsvorrichtung erlaubt somit die sichere Wartung von Stossdämpfern, die einseitig oder beidseitig mit Silentblocks ausgerüstet sind. Die verschiedenen Kopplungswerkzeuge und Adapter sind derart ausgestaltet, dass dazu korrespondierende Dämpferköpfe und Dämpferfüsse von Stossdämpfern unterschiedlicher Hersteller erfasst werden können, ohne den Silentblock zu belasten.

Alternativ oder zusätzlich ist eine zweite Haltevorrichtung vorgesehen ist, die eine Spannvorrichtung aufweist, mittels der ein Teil des Stossdämpfers, wie das Schutzrohr oder der Dämpferzylinder, ein sonstiges Aussenrohr oder eine Stange fixierbar ist. Durch die optionale Verwendung von zwei Haltevorrichtungen kann der Stossdämpfer stabil entlang der Arbeitsachse der Wartungsvorrichtung oder der zugeordneten Wartungsstation ausgerichtet werden.

Auch die zweite Haltevorrichtung ist vorzugsweise entlang der wenigstens einen Laufschiene der Wartungsvorrichtung verschiebbar, sodass ein beliebiger Teil des Stossdämpfers erfasst und eingespannt werden kann.

Vorzugsweise sind die Drehvorrichtung sowie die erste und die zweite Haltevorrichtung entlang den Laufschienen verfahrbar. Dazu sind die Drehvorrichtung sowie die Haltevorrichtungen mit Laufwerken, Rollenwagen oder Schlitten, versehen, die entlang den Laufschienen verfahrbar sind. Vorzugsweise sind Schlitten mit Schlittenfüssen vorgesehen, welche die Laufschienen umfassen und formschlüssig mit diesen gekoppelt sind.

Damit die Laufwerke an einer gewünschten Schienenposition bzw. auf einer gewünschten Höhe fixierbar sind, ist vorzugsweise eine parallel zur Laufschiene verlaufende Rasterplatte vorgesehen, die z.B. ein Lochraster aufweist, in das ein Arretierungsbolzen einsetzbar ist, der durch ein Teil des Laufwerks hindurch in ein Loch des Lochrasters eingefügt werden kann. Die Laufwerke können daher entlang den Schienen verschoben und mit einem Handgriff arretiert werden.

Parallel zur Laufschiene ist vorzugsweise eine Zahnstange vorgesehen, in die ein Zahnkranzsegment wahlweise eingreifen kann, welches am Laufwerk der Drehvorrichtung drehbar gelagert und mittels eines Hebels antreibbar ist. Zur Verschiebung der Drehvorrichtung wird der Eingriff des Zahnkranzes in die Zahnstange aufgehoben. Sobald die Drehvorrichtung eine Position erreicht hat, in der sie mit dem Stossdämpfer gekoppelt wird, wird der Zahnkranz an die Zahnstange angekoppelt und durch Drehung des Hebels gedreht, bis die Drehvorrichtung mit der gewünschten Kraft gegen den Stossdämpfer drückt. Anschliessend wird der Arretierungsbolzen zur Arretierung des Laufwerks eingesetzt. Auf diese Weise wird mit eine einfach aufgebaute Spannvorrichtung realisiert, die es erlaubt, die Drehvorrichtung frei zu verschieben und an einer bestimmten Position in einfacher Weise mit dem Stossdämpfer zu verspannen und zu arretieren.

Bei vertikaler Ausrichtung der Montagesäule werden die Drehvorrichtung und die Haltevorrichtungen vorzugsweise mit Ausgleichsvorrichtungen verbunden, welche z.B. über ein Verbindungselement, einen Stab oder ein Seil, eine Kraft auf die Drehvorrichtung und die Haltevorrichtungen ausüben, welche die entsprechende Gewichtskraft kompensiert. Das Gewicht der Drehvorrichtung und der Haltevorrichtungen wird daher durch Krafteinwirkung kompensiert, so dass die Drehvorrichtung und die Haltevorrichtungen mit minimaler Krafteinwirkung manuell an eine gewünschte Position verschoben werden können. Die erfindungsgemässe Wartungsvorrichtung, soweit sie nicht bereits motorisiert ist, kann vom Wartungspersonal daher bequem und ohne praktisch ohne Kraftaufwand bedient werden.

Nachfolgend wird die Erfindung anhand von Zeichnungen näher erläutert. Dabei zeigt:
- Fig. 1a: einen Stossdämpfer 9, der einen Dämpferkopf 96 mit einer daran anschliessenden Kolbenstange 95 aufweist, die über eine mit einem Aussengewinde 971 versehene Gewindeplatte 97 mit einem Schutzrohr 94 verbunden, in einer Kolbenstangenführung 98 gelagert und endseitig mit einem Dämpferkolben 99 verbunden ist, der in einem einwandigen oder mehrwandigen Dämpferzylinder 93 verschiebbar gelagert ist, der über eine Fussstange 92 mit einem Dämpferfuss 91 verbunden ist;
- Fig. 1b: den Stossdämpfer 9 von Fig. 1a mit einem Schnitt durch das von der Gewindeplatte 97 gehaltene Schutzrohr 94 entlang der in Fig. 1a gezeigten Dämpferachse y des Stossdämpfers 9;
- Fig. 1c: den Stossdämpfer 9 von Fig. 1a nach der Demontage des Schutzrohrs 94 mit einem Schnitt durch den einwandigen Dämpferzylinder 93 entlang der in Fig. 1a gezeigten Dämpferachse y;
- Fig. 1d: die Kolbenstangenführung 99 von Fig. 1b vereinzelt;
- Fig. 2: eine erfindungsgemässe Vorrichtung 1 zur Wartung von Stossdämpfern 9, wie sie z.B. in Fig. 1a gezeigt sind, mit zwei Wartungsstationen 1A, 1B, die je von einer Person bedient werden können;
- Fig. 3: eine erfindungsgemässe Wartungsvorrichtung 1 mit nur einer Wartungsstation mit zwei an einer Montagesäule 8 montierten Haltevorrichtungen 3, 4, mittels denen der Stossdämpfer 9 von Fig. 1a gehalten ist und mit einer Drehvorrichtung 2, die an der Montagesäule 8 mittels Schienen 81 entlang einer Arbeitsachse x verschiebbar gelagert ist;
- Fig. 3a: die Unterseite der Drehvorrichtung 2 von Fig. 3, die ein zylinderförmiges Kopplungsteil 23 aufweist, welches in einer Lagevorrichtung 24 drehbar gelagert ist;
- Fig. 3b: den Dämpferkopf 96 des Stossdämpfers 9 von Fig. 3, auf den ein erstes Kopplungswerkzeug 51 aufgesetzt ist, welches in das drehbar gelagerte Kopplungsteil 23 von Fig. 3a einführbar ist;
- Fig. 4a: die Wartungsvorrichtung 1 von Fig. 3 nachdem der von den Haltevorrichtungen 3 und 4 gehaltene Stossdämpfer 9 mit der Dämpferachse y koaxial zur Arbeitsachse x der Wartungsvorrichtung 1 ausgerichtet wurde, entlang der die Drehvorrichtung 2 gegen den Stossdämpfer 9 verschiebbar ist;
- Fig. 4b: die Wartungsvorrichtung 1 von Fig. 4a nachdem die Drehvorrichtung 2 gegen den Stossdämpfer 9 verschoben und das Kopplungswerkzeug 51 von Fig. 3b in das drehbar gelagerte Kopplungsteil 23 von Fig. 3a eingeführt wurde;
- Fig. 5a: die Wartungsvorrichtung 1 von Fig. 4a nach der Entfernung des Schutzrohrs 94 vom Stossdämpfer 9 mit einem Schnitt durch das zylinderförmige Kopplungsteil 23 der Drehvorrichtung 2, in das der Dämpferkopf 96 und die Kolbenstange 95 einführbar sind;
- Fig. 5b: ein zweites Kopplungswerkzeug 52, das einerseits mit der Kolbenstangenführung 98 von Fig. 1d und andererseits mit dem zylinderförmigen Kopplungsteil 23 der Drehvorrichtung 2 koppelbar ist;
- Fig. 5c: die Wartungsvorrichtung 1 von Fig. 5a nach dem Absenken der Drehvorrichtung 2, der Einführung des Dämpferkopfs 96 und der Kolbenstange 95 in das zylinderförmige Kopplungsteil 23 und der Verbindung des zweiten Kopplungswerkzeugs 52 mit dem Kopplungsteil 23 der Drehvorrichtung 2;
- Fig. 5d: die Drehvorrichtung 2 von Fig. 5c mit der mittels des zweiten Werkzeugs 52 daran angekoppelten Kolbenstangenführung 98 des Stossdämpfers 9;
- Fig. 6: einen Teil der Drehvorrichtung 2 von Fig. 5d; und
- Fig. 7: die beiden Haltevorrichtungen 3 und 4 von Fig. 3.

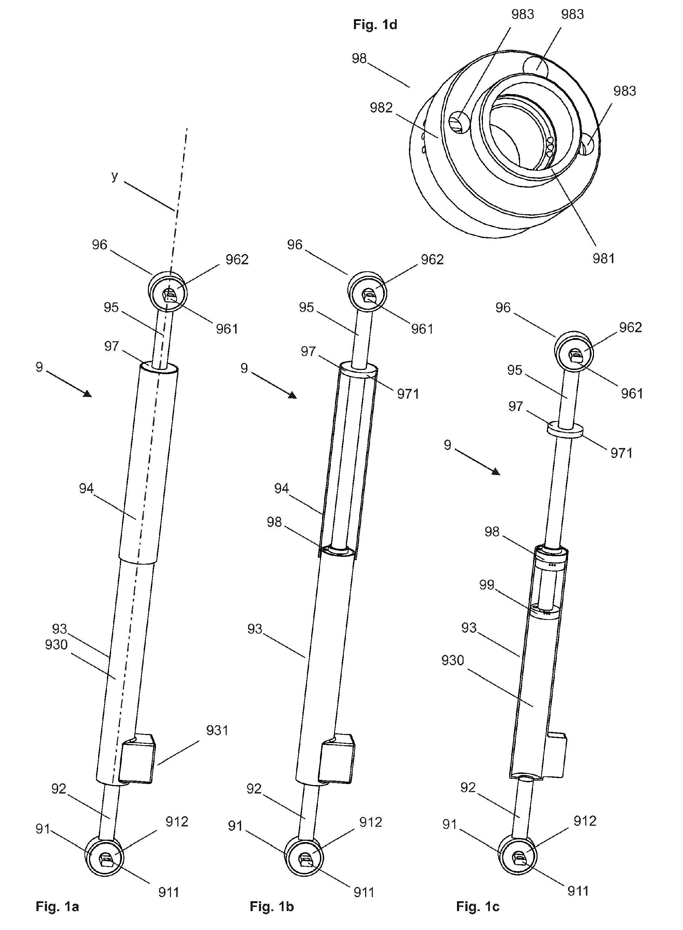

Fig. 1a zeigt einen Stossdämpfer 9, der einen Dämpferkopf 96 mit einer daran anschliessenden Kolbenstange 95 aufweist, die über eine mit einem Aussengewinde 971 versehene Gewindeplatte 97 mit einem Schutzrohr 94 verbunden, in einer Kolbenstangenführung 98 gelagert und endseitig mit einem Dämpferkolben 99 verbunden ist. Der Kolben 99 ist in einem einwandigen oder mehrwandigen Dämpferzylinder 93 verschiebbar gelagert, der über eine Fussstange 92 mit einem Dämpferfuss 91 verbunden ist. Dämpferkopf 96 und Dämpferfuss 91 weisen ein ringförmiges, metallenes Auge auf, in dem ein elastischer Lagerblock bzw. ein sogenannter Silentblock 962 bzw. 912 angeordnet ist, welcher in der Mitte von einem Kopplungsstab 961 bzw. 911 durchstossen ist. Insbesondere hochfrequente Schwingungen mit geringer Amplitude können durch die Silentblocks 962, 912 absorbiert werden, während tieffrequente Schwingungen mit hoher Amplitude durch die Verschiebung des Dämpferkolbens 99 innerhalb des mit einem viskosen Dämpfermedium 930 gefüllten Dämpferzylinders 93 absorbiert werden. Das Dämpfermedium bzw. die Dämpfungsflüssigkeit 930 kann in eine Kammer 931 verdrängt werden.

Fig. 1b zeigt den Stossdämpfer 9 von Fig. 1a mit einem Schnitt durch das von der Gewindeplatte 97 gehaltene Schutzrohr 94 entlang der in Fig. 1a gezeigten Dämpferachse y. Ferner ist eine Kolbenstangenführung 98 gezeigt, die der Lagerung der Kolbenstange 95 dient. Durch das Schutzrohr 94 wird der Raum oberhalb der Kolbenstangenlagerung frei gehalten, sodass der Bereich der Kolbenstange 95, der durch die Kolbenstangenführung 98 in den Dämpferzylinder 93 eingeführt wird, nicht verschmutzen kann. Um auf die Kolbenstangenführung 98 zugreifen zu können, wird das Schutzrohr 94 entfernt.

Fig. 1c zeigt den Stossdämpfer 9 von Fig. 1a nach der Demontage des Schutzrohrs 94. Ferner ist ein Schnitt durch den einwandigen Dämpferzylinder 93 entlang der in Fig. 1a gezeigten Dämpferachse y gezeigt. Der Dämpferkolben 99 ist innerhalb des Dämpferzylinders 93 verschiebbar, sodass das Dämpfermedium 930 verdrängt werden kann. Oft werden doppelwandige Dämpferzylinder 93 verwendet, die es erlauben, das Dämpfermedium 930 aus dem Bereich eines inneren Zylinderrohrs in einen Bereich zwischen dem inneren und einem äusseren Zylinderrohr zu verdrängen.

Fig. 1d zeigt die Kolbenstangenführung 99 von Fig. 1b, die ein Führungsrohr 981 zur Führung der Kolbenstange 95 und einen Montagezylinder 982 mit einem Aussengewinde umfasst, der in den mit einem Innengewinde versehenen Dämpferzylinder 93 eindrehbar ist. Der Montagezylinder 982 weist zudem Kopplungselemente 983 auf, an die ein Werkzeug angekoppelt werden kann, um den Montagezylinder 982 zu erfassen und zu drehen.

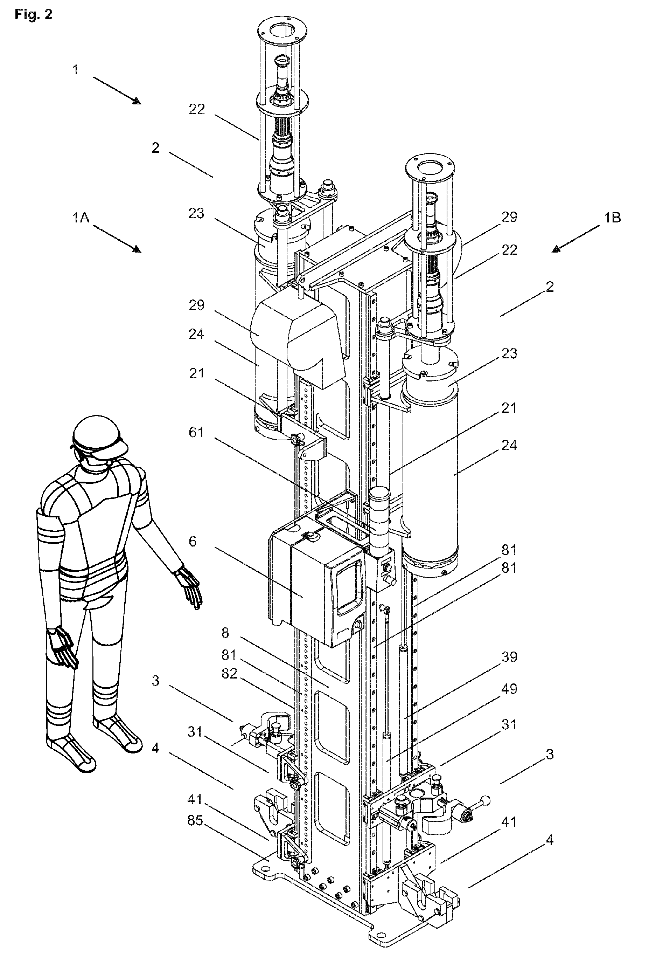

Fig. 2 eine erfindungsgemässe Vorrichtung 1, mittels der der in Fig. 1a gezeigte und weitere Stossdämpfer unterschiedlicher Hersteller vorteilhaft gewartet werden können. Die Vorrichtung umfasst zwei Wartungsstationen 1A, 1B, die je von einer Person bedient werden können. Mittels der Wartungsstationen 1A, 1B können die Stossdämpfer 9 schrittweise geöffnet werden, um Verschleissteile freizulegen und austauschen zu können. Nach dem Austausch der Verschleissteile können die Stossdämpfer 9 mittels der Wartungsstationen 1A, 1B wieder zusammengesetzt und verschlossen werden. Vorzugsweise sind Drehantriebe vorgesehen, mittels denen die zu montierenden Vorrichtungsteile mit einem gewünschten maximalen Drehmoment gelöst und wieder fest gezogen werden können.

Die Wartungsvorrichtung 1 umfasst eine vertikal ausgerichtete Montagesäule 8, die auf einem Säulenfuss 85 ruht, der vorzugsweise am Boden verschraubt wird. Jede der beiden Wartungsstationen umfasst eine erste und eine zweite Haltevorrichtung 3, 4, die der Fixierung eines Stossdämpfers 9 dienen, sowie eine mit einem Drehantrieb 22 versehene Drehvorrichtung 2, mittels der ein Teil des fixierten Stossdämpfers 9 erfasst und gedreht werden kann.

Ferner ist eine Steuereinheit 6 vorgesehen, mittels der der Drehantrieb 22 steuerbar ist. Dabei kann der Drehantrieb 22 in die eine oder andere Drehrichtung bewegt werden. Vorzugsweise ist ein maximales Drehmoment einstellbar. Ferner kann der Bewegungsverlauf überwacht werden, um bei einer sprungartigen Änderung den Betrieb automatisch anzuhalten. Der Zustand der Wartungsvorrichtung 1 und des laufenden Wartungsbetriebs kann mit einer Signalisierungseinheit bzw. einer Anzeigesäule 61 signalisiert werden.

Die Wartungsvorrichtung 1 kann mit pneumatisch, hydraulisch oder elektrisch betriebenen Drehantrieben 22 ausgerüstet werden. Z.B. können Drehantriebe 22 und zugehörige Steuerungen 6 von Atlas Copco eingesetzt werden, die in [4], Tensor-Elektroschrauber für hohe Prozess-Sicherheit und mehr Produktivität, Atlas Copco 2006, beschrieben sind.

In der in Fig. 2 gezeigten Ausgestaltung sind die Drehvorrichtungen 2 mit einem Drehantrieb 22 versehen, der auf ein zylinderförmiges Kopplungsteil 23 einwirkt, welches in einer Lagervorrichtung 24 drehbar gehalten ist.

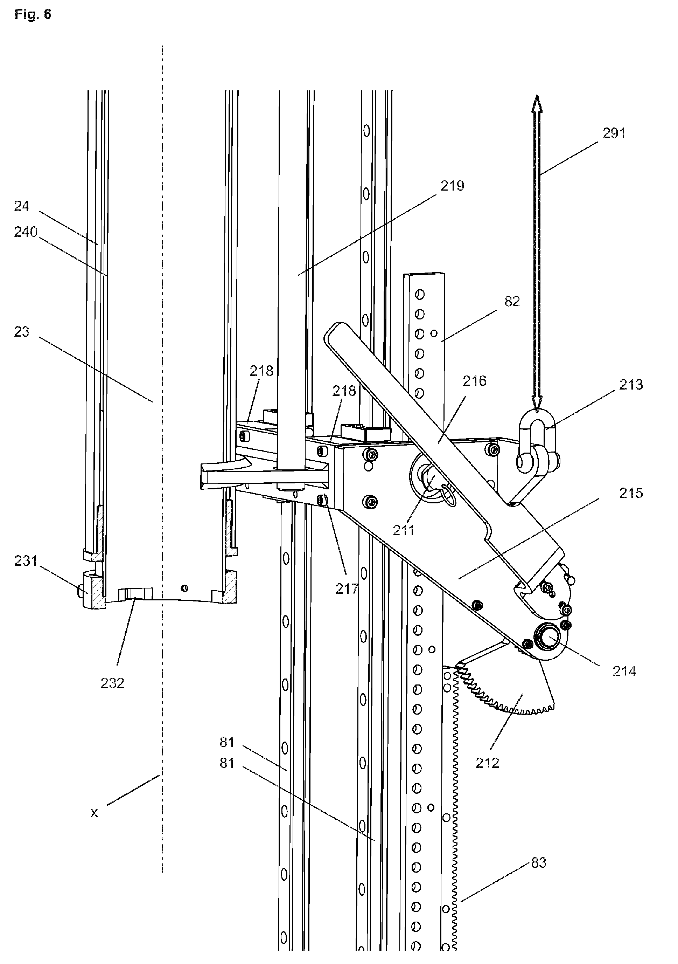

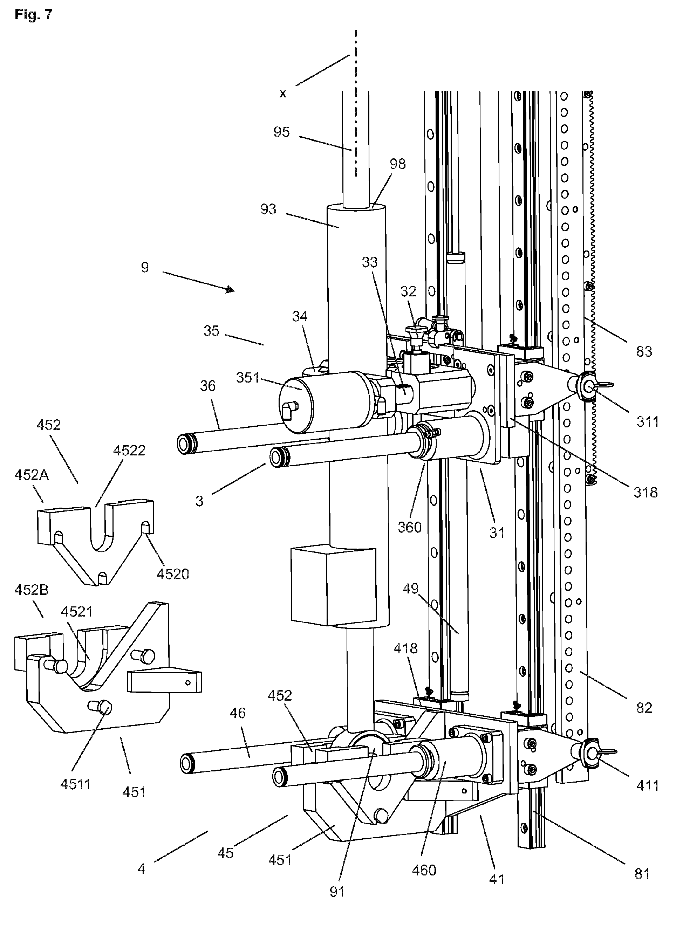

Die Drehvorrichtung 2 und die beiden Haltevorrichtungen 3 und 4 sind auf Laufwerken, d.h. Schlitten 21, 31 und 41 montiert, die entlang von je zwei Laufschienen 81 verfahrbar sind, die parallel zueinander ausgerichtet mit der Montagesäule 8 verschraubt sind. Parallel zu jedem Paar der Laufschienen 81 ist eine Rasterplatte 82 ausgerichtet, die ein Raster mit Bohrungen aufweist, in die ein Arretierungsbolzen 211, 311, 411 einsetzbar ist, um den zugehörigen Schlitten 21, 31, 41 an einer gewünschten Position der Laufschienen 81 zu arretieren, wie dies in den Figuren 6 und 7 gezeigt ist. Diese optionale Möglichkeit zur vertikalen Verschiebung der beiden Haltevorrichtungen 3, 4 erlaubt es, den Stossdämpfer 9 auf einer gewünschten Arbeitshöhe zu fixieren. Fig. 7 zeigt, dass der Stossdämpfer 9 in die untere bzw. erste Haltevorrichtung 4 eingesetzt und mittels der oberen bzw. zweiten Haltevorrichtung 3, die eine Spannvorrichtung 35 aufweist, fixiert werden kann.

Die Schlitten 21, 31, 41 sind zudem mit Ausgleichsvorrichtungen 29, 39, 49 verbunden, die je über ein Verbindungselement mit einer Ausgleichskraft auf den zugehörigen Schlitten 21, 31, 41 einwirken, durch die die Gewichtskraft der Drehvorrichtung 2, der ersten und der zweiten Haltevorrichtung 3, 4 je kompensiert werden. Die Drehvorrichtung 2 sowie die erste und zweite Haltevorrichtung 3, 4 können vom Wartungspersonal daher mit einer minimalen Kraft verschoben werden, die lediglich für die Beschleunigung der Masse erforderlich ist.

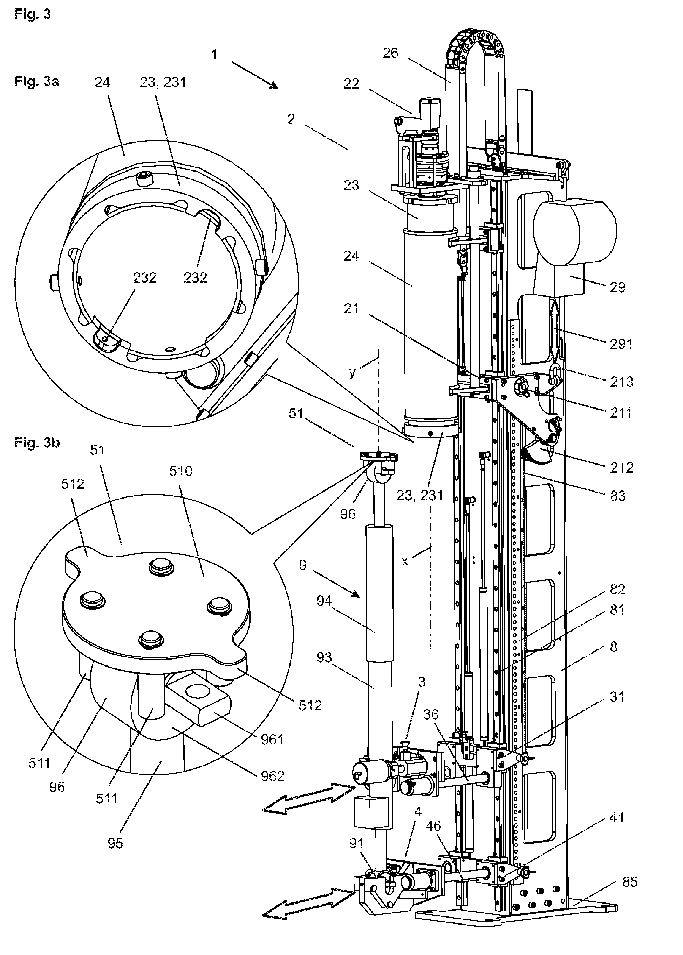

Fig. 3 zeigt eine erfindungsgemässe Wartungsvorrichtung 1 mit zwei an einer Montagesäule 8 montierten Haltevorrichtungen 3, 4, mittels denen der Stossdämpfer 9 von Fig. 1a gehalten ist und mit einer Drehvorrichtung 2, die über eine Energiekette 26 mit einem Energiemedium und mit Steuersignalen versorgt wird. Die Wartungsvorrichtung 1 ist nur mit einer Arbeitsstation bestückt. Eine zweite Arbeitsstation kann wahlweise nachgerüstet werden. Die Drehvorrichtung 2 und die beiden Haltevorrichtungen 3 und 4 entsprechen der Ausgestaltung von Fig. 2. Die Drehvorrichtung 2 unterscheidet sich lediglich durch den Einsatz eines anderen Drehantriebs 22.

Die Haltevorrichtungen 3 und 4 sind über Lagerwellen 36 bzw. 46 mit dem zugehörigen Schlitten 31 bzw. 41 verbunden und entlang diesen senkrecht zur Montagesäule 8 nach aussen verschiebbar. Für die Montage des Stossdämpfers 9 sowie für das Herausziehen und das Einsetzen des Dämpferkolbens können die Haltevorrichtungen 3 und 4 daher nach aussen gezogen werden. Der Stossdämpfer 9 kann mit dem Dämpferfuss 91 in die untere Haltevorrichtung 4 eingesetzt und mittels der oberen Haltevorrichtung 3 festgespannt werden. Die untere Haltevorrichtung 4 wird entlang den Laufschienen 81 so weit nach oben gefahren, bis der Stossdämpfer 9 eine gewünschte Arbeitshöhe erreicht. Die obere Haltevorrichtung 3 wird entlang den Laufschienen 81 so weit verschoben, bis das gewünschte Teil des Stossdämpfers 9, z.B. der Dämpferzylinder 93 oder das Schutzrohr 94 erfasst und eingespannt werden kann. Durch eine entsprechende Verschiebung der Haltevorrichtungen 3 und 4 senkrecht zur Montagesäule 8 wird die Dämpferachse y vertikal und somit parallel zur Arbeitsachse x der Wartungsvorrichtung 1 ausgerichtet. Nach der Fixierung des Stossdämpfers 9 wird ein Kopplungswerkzeug 51 auf den Dämpferkopf 96 aufgesetzt. Anschliessend wird der Stossdämpfer 9 gegen die Montagesäule 8 verschoben, bis die Dämpferachse y koaxial zur Arbeitsachse x ausgerichtet ist. Anschliessend wird die Drehvorrichtung 2 nach unten gefahren, bis das Kopplungswerkzeug 51 daran angekoppelt ist. Mittels einer Spannvorrichtung, die am Schlitten 21 der Drehvorrichtung 2 montiert ist, kann die Drehvorrichtung 2 weiter gegen den Stossdämpfer 9 gedrückt und anschliessend mittels eines Arretierungsbolzens 211 fixiert werden, welcher in eine Bohrung der Rasterplatte eingesetzt wird. Die am Schlitten 21 vorgesehene Spannvorrichtung umfasst ein drehbar gelagertes Zahnkranzsegment 212, welches nach der Verschiebung der Drehvorrichtung 2 mit einer Zahnstange 83 gekoppelt und gedreht wird, um die Drehvorrichtung 2 weiter nach unten zu drücken.

Fig. 3 zeigt ferner, dass die Ausgleichsvorrichtung 29 über ein Verbindungselement bzw. Zugseil 291 mit einem Haken 213 verbunden ist, um das Gewicht der Drehvorrichtung 2 zu kompensieren.

Die Detaildarstellung von Fig. 3a zeigt die Unterseite der Drehvorrichtung 2 von Fig. 3, mit dem zylinderförmigen Kopplungsteil 23, welches in der Lagevorrichtung 24 drehbar gelagert ist und an der Unterseite einen Kopplungsring 231 mit darin vorgesehenen Aufnahmeöffnungen 232 aufweist.

Fig. 3b zeigt den Dämpferkopf 96 des Stossdämpfers 9 von Fig. 3, auf den ein erstes Kopplungswerkzeug 51 aufgesetzt ist, welches eine Kopplungsplatte 510 mit Haltenocken 512 aufweist, die formschlüssig in den Kopplungsring 231 von Fig. 3a einführbar ist. Die Kopplungsplatte 510 ist ferner mit vier Haltestäben 511 versehen, die beidseitig des vom Silentblock 962 gehaltenen Kopplungsstabs 961 nach unten geführt sind und am ringförmigen Auge des Dämpferkopfs 96 anliegen. Bei einer Drehung des ersten Kopplungswerkzeugs 51 wirken die Haltestäben 511 auf das Auge des Dämpferkopfs 96 und nicht auf den Kopplungsstab 961 ein, so dass der Silentblock 962 nicht beeinträchtigt wird.

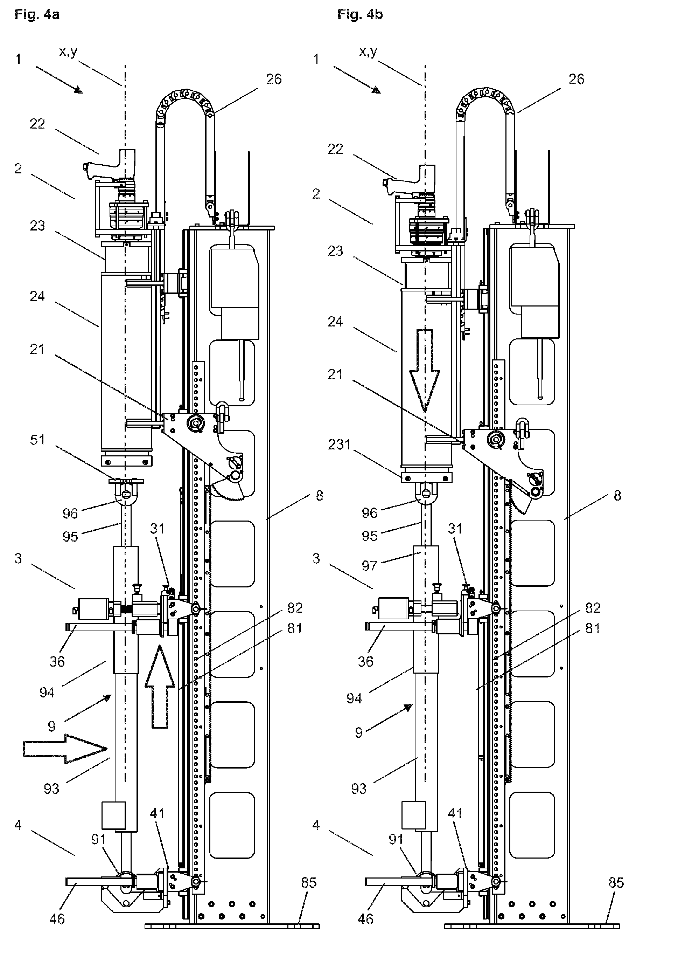

Fig. 4a zeigt die Wartungsvorrichtung 1 von Fig. 3 nachdem der von den Haltevorrichtungen 3 und 4 gehaltene Stossdämpfer 9 mit der Dämpferachse y koaxial zur Arbeitsachse x der Wartungsvorrichtung 1 ausgerichtet wurde, entlang der die Drehvorrichtung 2 gegen den Stossdämpfer 9 verschiebbar ist. Zudem ist gezeigt, dass die obere Haltevorrichtung 3 nach oben auf die Höhe des Schutzrohrs 94 verschoben und mit diesem verspannt wurde.

Fig. 4b zeigt die Wartungsvorrichtung 1 von Fig. 4a nachdem die Drehvorrichtung 2 gegen den Stossdämpfer 9 verschoben und das Kopplungswerkzeug 51 von Fig. 3b in das drehbar gelagerte Kopplungsteil 23 von Fig. 3a eingeführt wurde. Somit sind das Schutzrohr 94 und der mit der Kolbenstange 95 verbundene Dämpferkopf 96 fest mit der Wartungsvorrichtung 1 verbunden. Durch Inbetriebsetzung des Drehantriebs 22 kann der Dämpferkopf 96 mit der Kolbenstange 95 somit gegenüber dem Schutzrohr 94 gedreht werden, sodass dieses von der mit der Kolbenstange 95 verbundenen Gewindeplatte 97 gelöst werden kann.

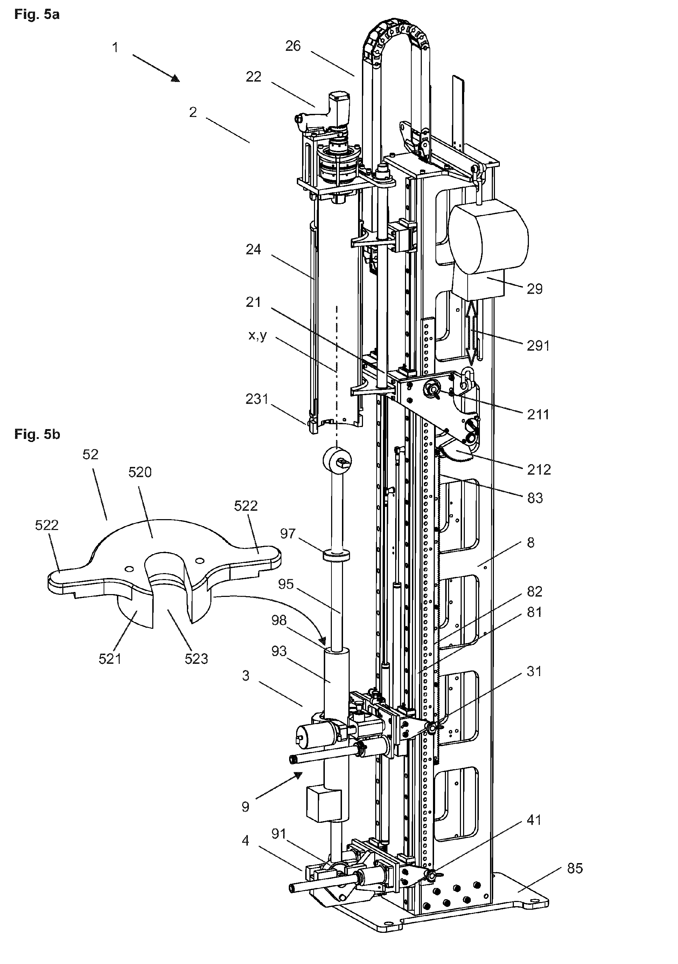

Fig. 5a zeigt die Wartungsvorrichtung 1 von Fig. 4a nach der Entfernung des Schutzrohrs 94 vom Stossdämpfer 9. Gezeigt ist ferner ein Schnitt durch das zylinderförmige Kopplungsteil 23 und die Lagervorrichtung 24. Es ist ersichtlich, dass der Dämpferkopf 96 und die Kolbenstange 95 in das zylinderförmige Kopplungsteil 23 einführbar sind, damit der Kopplungsring 231 über ein zweites Kopplungswerkzeug 52 mit einem tiefer gelegenen Teil des Stossdämpfers 9, nämlich mit der mit dem Dämpferzylinder 93 verschraubten Kolbenstangenführung 98 koppelbar ist.

Fig. 5b zeigt das mit der Kolbenstangenführung 98 koppelbare zweite Kopplungswerkzeug 52, das eine Kopplungsplatte 520 mit Haltenocken 522 aufweist, die in den Kopplungsring 231 der Drehvorrichtung 2 einsetzbar ist. Die Kopplungsplatten 510, 520 der Kopplungswerkzeuge 51, 52 weisen dabei etwa dieselben Abmessungen auf. Weiter umfasst das zweite Kopplungswerkzeug 52 einen Kopplungszylinder 521, der mit der Kolbenstangenführung 98 von Fig. 1d koppelbar ist und der eine Ausnehmung 523 zur Aufnahme der Kolbenstange 95 aufweist. Das zweite Kopplungswerkzeug 52 kann daher seitlich gegen die Kolbenstange 95 und dann nach unten gegen die Kolbenstangeführung 98 geführt und daran angekoppelt werden.

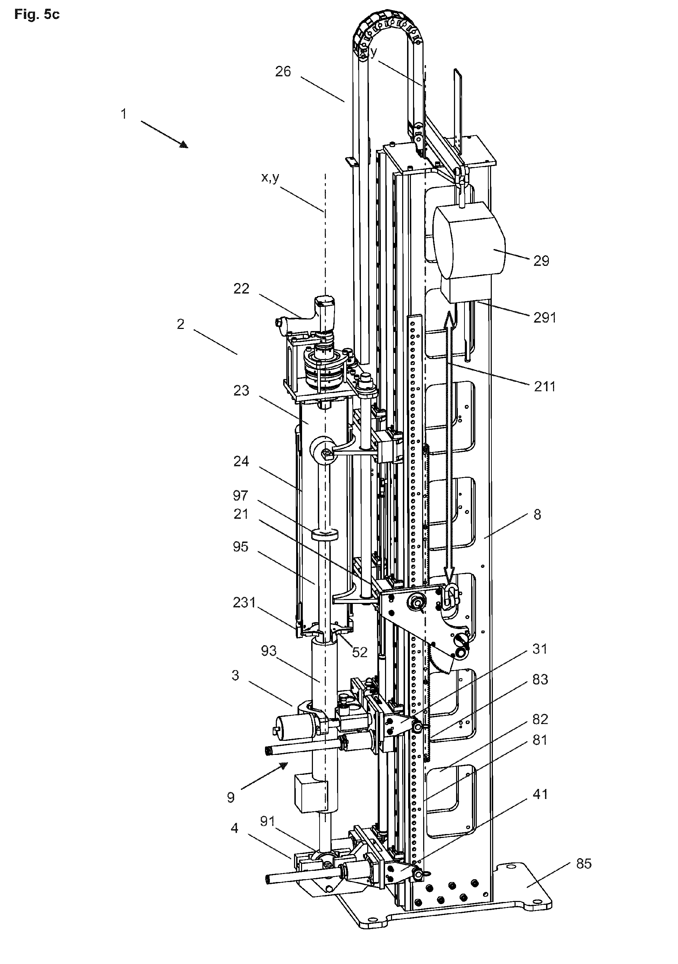

Fig. 5c zeigt die Wartungsvorrichtung 1 von Fig. 5a nach dem Absenken der Drehvorrichtung 2, der Einführung des Dämpferkopfs 96 und der Kolbenstange 95 in das zylinderförmige Kopplungsteil 23 und der Einführung der Kopplungsplatte 520 des zweiten Kopplungswerkzeugs 52 in den Kopplungsring der Drehvorrichtung 2.

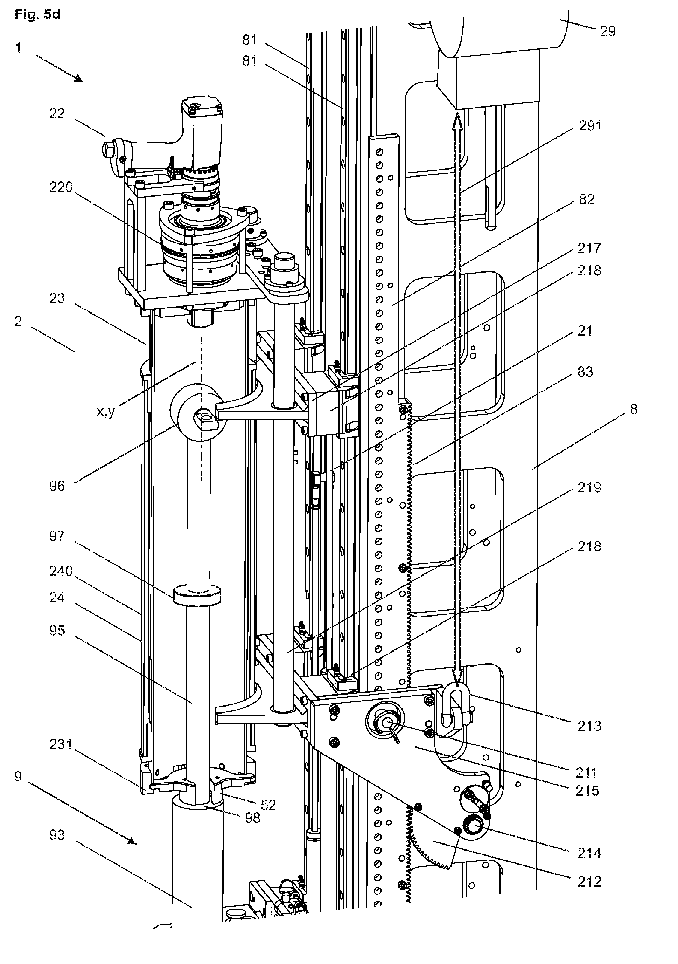

Fig. 5d zeigt die Drehvorrichtung 2 von Fig. 5c mit der mittels des zweiten Werkzeugs 52 daran angekoppelten Kolbenstangenführung 98. Der Schlitten 21, der die Drehvorrichtung 2 hält, weist vier Schlittenfüsse 218 auf, die paarweise formschlüssig an die Laufschienen 81 angekoppelt sind und diese umgreifen. Ferner sind die Schlittenfüsse 218 durch Traversen 217 paarweise miteinander verbunden. Die Traversen 217 halten einerseits die Lagervorrichtung 24 und andererseits Haltestangen 219, mittels denen der Drehantrieb 22 und das damit verbundene zylinderförmige Kopplungsteil 23 gehalten sind. Die Lagervorrichtung 24 umfasst ein Lagerrohr 240, in dem das zylinderförmige Kopplungsteil 23 drehbar gelagert ist und durch das das zylinderförmige Kopplungsteil 23 hindurch geführt ist. Durch Inbetriebsetzung des Drehantriebs 22, der über ein Getriebe 220 mit dem zylinderförmigen Kopplungsteil 23 verbunden ist, kann die Kolbenstangenführung 98 nun wahlweise gedreht werden.

Fig. 5d zeigt ferner das Zahnkranzsegment 212, das in Eingriff mit der Zahnstange 83 steht und durch eine Betätigung der Antriebswelle 214 mittels eines Hebels gedreht wurde, um die Drehvorrichtung 2 gegen den Stossdämpfer 9 zu drücken. Der nicht gezeigte Hebel wird z.B. mit der Antriebswelle 214 verbunden.

Nach der Ankopplung der Drehvorrichtung 2 an die Kolbenstangenführung 98 kann diese gedreht und vom Dämpferzylinder 93 gelöst werden. Anschliessend kann die Kolbenstange 95 mit dem Dämpferkolben 99 aus dem Dämpferzylinder 93 herausgezogen werden. Zu diesem Zweck wird vorzugsweise eine Kranvorrichtung vorgesehen, die z.B. an der Oberseite der Montagesäule 8 montiert ist. Bevor die Kranvorrichtung mit der Kolbenstange 95 gekoppelt wird, werden die Haltevorrichtungen 3 und 4 vorzugsweise wieder ausgefahren bzw. senkrecht zur Arbeitsachse x verschoben. Die Kolbenstange 95 kann nun nach oben gezogen werden, ohne mit der Drehvorrichtung 2 zu kollidieren.

Fig. 6 zeigt einen Teil der Drehvorrichtung 2 von Fig. 5d ohne die Montagesäule 8. Gezeigt sind zwei formschlüssig an die Laufschienen 81 angekoppelte Schienenfüsse 218, die durch eine Traverse 217 miteinander verbunden sind. Die Traverse 217 hält die Lagevorrichtung 24 mit dem Lagerrohr 240, innerhalb dessen das zylinderförmige Kopplungsteil 23 drehbar gehalten ist. Unterhalb des Lagerrohrs 240 ist vom Kopplungsteil 23 der Kopplungsring 231 gehalten, der Aufnahmeöffnungen 232 aufweist, in die die Haltenocken 512, 522 der beiden Kopplungswerkzeuge 51, 52 eingreifen können.

Gezeigt ist ferner, dass die beiden Schienenfüsse 218 mit einer Halteplatte 215 verbunden sind, in die der Arretierungsbolzen 211 und die Antriebswelle 214 eingesetzt sind. Zudem ist die Halteplatte 215 mit dem Haken 213 versehen, der über das Verbindungselement 291 mit der Ausgleichsvorrichtung 29 (siehe Fig. 3) verbunden ist. Das von der Antriebswelle 214 gehaltene Zahnkranzsegment 212 wird, nach dem Herunterfahren der Drehvorrichtung 2 gegen den Stossdämpfer 9, mittels des Hebels 216 gegen die Zahnstange 83 gedreht und damit gekoppelt. Mit einer weiteren Drehung des Hebels 216 wird die Drehvorrichtung 2 somit nach unten gezogen und gegen den Stossdämpfer 9 verspannt. Durch eine Drehung des Hebels 216 zurück, kann das Zahnkranzsegment 212 von der Zahnstange 83 wieder gelöst werden, die in dieser Ausgestaltung mit der Rasterplatte 82 einstückig verbunden ist. Die Spannvorrichtung mit dem Zahnkranzsegment 212 kann daher nach einer Verschiebung der Drehvorrichtung 2 bedarfsweise eingesetzt werden, um eine optimale Ankopplung an den Stossdämpfer 9 zu gewährleisten.

Fig. 7 zeigt die beiden Haltevorrichtungen 3 und 4 von Fig. 3. Der Schlitten 41 der unteren Haltevorrichtung 4 ist von einer Ausgleichsvorrichtung 49 gehalten und durch einen Arretierungsbolzen 411 mit der Rasterplatte 82 verbunden. Die beiden Schlitten 31 und 41 sind je mit zwei Lagerwellen 36 bzw. 46 versehen und entlang denen die Haltevorrichtungen 3, 4 verschiebbar sind, um den Stossdämpfer 9 senkrecht zur Montagesäule 8 zu verschieben. Dazu sind die Haltevorrichtungen 3, 4 mit Lagerblöcken 360, 460 versehen, die entlang den Lagerwellen 36 bzw. 46 verschiebbar sind (siehe auch Fig. 3).

Die erste Haltevorrichtung 4 ist mit einer Aufnahmevorrichtung 45 versehen, die ein Halteteil 451 aufweist, welches mit einem von vorzugsweise mehreren Adaptern 452 verbindbar ist. Die Adapter 452 weisen ein Aufnahmeprofil 4521 auf, das der Aufnahme und dem Halten des Dämpferfusses 91 des Stossdämpfers 9 dient und das Aufnahmeöffnungen 4522 aufweist, in die der im Dämpferfuss 91 gehaltene Kopplungsstab 911 einsetzbar ist. Der Dämpferfuss 91 kann daher gehalten werden, ohne dass Kräfte auf den darin gelagerten Silentblock einwirken. Für alle zu bearbeitenden Stossdämpfer 9 werden passende Adapter 452 bereitgehalten, sodass alle zu wartenden Stossdämpfer 9 in die untere Haltevorrichtung 4 eingesetzt werden können.

In der vorliegenden Ausgestaltung ist ein zweiteiliger Adapter 452 vorgesehen, der zwei Adapterplatten 452A, 452B aufweist, die je mit Ausnehmungen 4520 versehen sind, die Montagebolzen 4511 aufnehmen können, welche am Halteteil 451 vorgesehen sind. Die Adapterplatten 452A, 452B können daher beidseits am Halteteil 451 eingehängt und mit einem Handgriff ausgetauscht werden.

Die obere Haltevorrichtung 3, die ebenfalls mittels des zugehörigen Arretierungsbolzens 311 mit der Rasterplatte 82 verbunden ist, umfasst eine pneumatische Spannvorrichtung 35, die vorzugsweise mittels der Steuereinheit 6 steuerbar ist. Gezeigt ist ein pneumatischer Zylinder 351 mittels dessen die Spannvorrichtung 35 geschlossen werden kann. Die Spannvorrichtung 35 kann an den Durchmesser der einzuspannenden Teile 93, 94 des Stossdämpfers 9 angepasst werden. Dazu ist ein Spannbügel 34 vorgesehen, der von einer Justierstange 33 gehalten ist. Die Justierstange 33 kann in einen Lagerblock eingefahren und mittels eines Fixierbolzens 32 fixiert werden.

### Bezugszeichenliste

- 1: Vorrichtung zur Wartung von Dämpfern
- 1A: erste Vorrichtung zur Wartung von Dämpfern
- 1B: zweite Vorrichtungen zur Wartung von Dämpfern
- 2: Drehvorrichtung
- 21: Laufwerk der Drehvorrichtung
- 211: Arretierungsbolzen
- 212: Zahnkranzsegment
- 213: Haken
- 214: Antriebswelle
- 215: Halteplatte
- 216: Hebel oder Kurbel
- 217: Traversen
- 218: Laufwerksfüsse
- 219: Haltestangen
- 22: Drehantrieb
- 23: Kopplungsteil
- 231: Kopplungsring
- 232: Aufnahmeöffnung
- 24: Lagervorrichtung
- 26: Energiekette
- 29: Ausgleichsvorrichtung
- 291: Verbindungselement
- 3: obere Haltevorrichtung
- 31: Laufwerk für die obere Haltevorrichtung
- 32: Fixierbolzen
- 33: Justierstange
- 34: Spannbügel
- 35: Spannvorrichtung
- 36: Lagerwellen
- 360: Lagerblock
- 351: pneumatischer Zylinder
- 311: Arretierungsbolzen
- 318: Laufwerksfüsse
- 39: Ausgleichsvorrichtung für die obere Haltevorrichtung
- 4: untere Haltevorrichtung
- 41: Laufwerk für die untere Haltevorrichtung
- 411: Arretierungsbolzen
- 418: Laufwerksfüsse
- 45: Aufnahmevorrichtung
- 451: Halteteil
- 4511: Montagebolzen
- 452: Adapter
- 452A: erste Adapterplatte
- 452B: zweite Adapterplatte
- 4520: Ausnehmungen
- 4521: Aufnahmeprofil
- 4522: Aufnahmeöffnungen
- 46: Lagerwellen
- 460: Lagerblock
- 49: Ausgleichsvorrichtung für die untere Haltevorrichtung
- 51: erstes Kopplungswerkzeug
- 510: Kopplungsplatte
- 511: Haltestäbe
- 512: Haltenocken
- 52: zweites Kupplungswerkzeug
- 520: Kopplungsplatte
- 521: Kopplungszylinder
- 522: Haltenocken
- 523: Ausnehmung im Kopplungsring 521
- 6: Steuereinheit
- 61: Signalisierungseinheit
- 8: Montagesäule
- 81: Laufschienen
- 82: Rasterplatte oder Lochplatte
- 83: Zahnstange
- 85: Säulenfuss
- 9: Dämpfer, Stossdämpfer
- 91: Dämpferfuss
- 911: Kopplungsstab
- 912: Silentblock
- 92: Fussstange
- 93: einwandiger oder mehrwandiger Dämpferzylinder
- 930: Dämpfermedium
- 931: Ölkammer
- 94: Schutzrohr
- 95: Kolbenstange
- 96: Dämpferkopf
- 961: Kopplungsstab
- 962: Silentblock
- 97: Gewindeplatte
- 971: Aussengewinde
- 98: Kolbenstangenführung
- 981: Führungsrohr
- 982: Montagezylinder mit Aussengewinde
- 983: Kopplungselemente
- 99: Dämpferkolben

## Patentansprüche

1. Vorrichtung (1) zur Wartung von Stossdämpfern (9), die einen Dämpferfuss (91) und einen Dämpferkopf (96) sowie wenigstens ein dazwischenliegendes Rohrelement (93, 94) aufweisen, mit wenigstens einer Haltevorrichtung (3, 4), mittels der ein erstes Teil des Stossdämpfers (9) fixierbar ist, und mit einer Drehvorrichtung (2), mittels der ein zweites Teil der Stossdämpfers (9) drehbar ist, **dadurch gekennzeichnet, dass** eine Montagesäule (8) mit wenigstens einer Laufschiene (81) vorgesehen ist, entlang der die mit einem Drehantrieb (22) versehene Drehvorrichtung (2) koaxial zu einer Arbeitsachse (x) verschiebbar und an ein zu drehendes Teil des Stossdämpfers (9) ankoppelbar ist, der mittels der wenigstens einen Haltevorrichtung (3, 4) entlang der Arbeitsachse (x) ausgerichtet fixierbar ist.

2. Vorrichtung (1) nach Anspruch 1, **dadurch gekennzeichnet, dass** die wenigstens eine Haltevorrichtung (3, 4) entlang der wenigstens einen Laufschiene (81) verschiebbar ist und/oder dass die wenigstens eine Haltevorrichtung (3, 4) quer zur Arbeitsachse (x) ausfahrbar ist.

3. Vorrichtung (1) nach Anspruch 1 oder 2, **dadurch gekennzeichnet, dass** eine erste Haltevorrichtung (3) vorgesehen ist, in die der Dämpferfuss (91) einsetzbar ist und in der der Dämpferfuss (91) drehfest gehalten ist.

4. Vorrichtung (1) nach Anspruch 1, 2 oder 3, **dadurch gekennzeichnet, dass** eine zweite Haltevorrichtung (4) vorgesehen ist, die eine Spannvorrichtung aufweist, mittels der ein Rohrelement (93, 94) des Stossdämpfers (9) fixierbar ist.

5. Vorrichtung (1) nach einem der Ansprüche 1 - 4, **dadurch gekennzeichnet, dass** eine parallel zur Laufschiene (81) verlaufende Rasterplatte (82) vorgesehen ist und dass die Drehvorrichtung (2), die erste Haltevorrichtung (3) und/oder die zweite Haltevorrichtung (4) auf je einem Laufwerk (21, 31, 41) entlang der wenigstens einen Laufschiene (81) verschiebbar sind, das an ausgewählten Positionen an der Rasterplatte (82) arretierbar ist.

6. Vorrichtung (1) nach einem der Ansprüche 1 - 5, **dadurch gekennzeichnet, dass** eine parallel zur Laufschiene (81) verlaufende Zahnstange (83) vorgesehen ist und dass am Laufwerk (21) der Drehvorrichtung (2) ein für den Eingriff in die Zahnstange (83) vorgesehenes Zahnkranzsegment (212) drehbar gelagert und mittels eines Hebels (216) antreibbar ist.

7. Vorrichtung (1) nach einem der Ansprüche 1 - 6, **dadurch gekennzeichnet, dass** die Drehvorrichtung (2), die erste Haltevorrichtung (3) und/oder die zweite Haltevorrichtung (4) je mit einer Ausgleichsvorrichtung (29, 39, 49) verbunden sind, mittels der das Gewicht der Drehvorrichtung (2), der ersten Haltevorrichtung (3) bzw. der zweiten Haltevorrichtung zumindest teilweise kompensiert wird.

8. Vorrichtung (1) nach einem der Ansprüche 1 - 7, **dadurch gekennzeichnet, dass** die Drehvorrichtung (2) eine Lagervorrichtung (24) umfasst, die ein zylinderförmiges und koaxial zur Arbeitsachse (x) ausgerichtetes Kopplungsteil (23) drehbar hält, welches auf der von den Haltevorrichtungen (3, 4) abgewandten Seite mit einem Drehantrieb (22) verbunden und auf der den Haltevorrichtungen (3, 4) zugewandten Seite mit wenigstens einem Kopplungswerkzeug (51, 52) verbindbar ist, welches an ein Teil des Stossdämpfers (9) ankoppelbar ist.

9. Vorrichtung (1) nach einem der Ansprüche 1-8, **dadurch gekennzeichnet, dass** ein erstes Kopplungswerkzeug (51) vorgesehen ist, das einerseits mit der Drehvorrichtung (2), vorzugsweise mit den dem Kopplungsteil (23), und andererseits mit dem Dämpferkopf (96) koppelbar ist und/oder dass ein zweites Kopplungswerkzeug (52) vorgesehen ist, dass einerseits mit der Drehvorrichtung (2), vorzugsweise mit den dem Kopplungsteil (23), und andererseits mit der Kolbenstangenführung (98) koppelbar ist und das eine Ausnehmung zur Aufnahme der Kolbenstange (95) aufweist.

10. Vorrichtung (1) nach Anspruch 8 oder 9, **dadurch gekennzeichnet, dass** das Kopplungsteil (23) zur Aufnahme des Dämpferkopfs (96) und zumindest teilweise zur Aufnahme der Kolbenstange (95) vorgesehen ist und/oder dass das Kopplungsteil (23) am unteren Ende einen Kopplungsring (231) mit Kopplungselementen (232) aufweist, in den die Werkzeuge (51, 52) einsetzbar sind.

11. Vorrichtung (1) nach einem der Ansprüche 1 - 10, **dadurch gekennzeichnet, dass** der hydraulische, pneumatische oder elektrische Drehantrieb (22) vom zugehörigen Laufwerk gehalten und vorzugsweise mit einer Energiekette (26) verbunden ist.

12. Vorrichtung (1) nach einem der Ansprüche 1-11, **dadurch gekennzeichnet, dass** eine Steuervorrichtung (6) vorgesehen ist, die zur Steuerung der Drehrichtung und des Drehmoments des Drehantriebs (22) vorgesehen ist.

13. Vorrichtung (1) nach einem der Ansprüche 1 - 12, **dadurch gekennzeichnet, dass** die erste Haltevorrichtung (4) mit einer Aufnahmevorrichtung (45) versehen ist, die der Aufnahme des Dämpferfusses (91) dient.

14. Vorrichtung (1) nach Anspruch 13, **dadurch gekennzeichnet**, die Aufnahmevorrichtung (45) ein Halteteil (451) aufweist, welches mit einem von vorzugsweise mehreren Adaptern (452) verbindbar ist, die ein Aufnahmeprofil (4521) aufweisen, das der Aufnahme und dem Halten des Dämpferfusses (91) dient und das Aufnahmeöffnungen (4522) aufweist, in die der im Dämpferfuss (91) gehaltene Kopplungsstab (911) einsetzbar ist.

15. Vorrichtung (1) nach einem der Ansprüche 1 - 14, **dadurch gekennzeichnet, dass** die Montagesäule (8) auf einander gegenüberliegenden Seiten je eine Wartungsstation (1A, 1B) aufweist und/oder dass die Montagesäule (8) einen Säulenfuss (85) aufweist und vertikal ausgerichtet ist.
